# EUROPEAN PATENT APPLICATION

(11) **EP 3 001 366 A1**
(43) Date of publication of application: **30.03.2016**
(21) Application number: 15182569.2
(22) Date of filing: 26.08.2015
(51) Int. Cl.: G06Q 10/06

(54) **PREDICTIVE FATIGUE RISK MANAGEMENT**

(30) Priority: 29.09.2014 US 201414500196
(71) Applicant: The Boeing Company, Chicago, IL 60606-2016 (US)
(72) Inventor: ZIMMER, Nico, Chicago, IL 60606-2016 (US); VAABEN, Bo, 3060 Espergaerde (DK); BOJANOWSKI, Wojciech, Chicago, IL 60606-2016 (US); BLOKUS, Pawel, Chicago, IL 60606-2016 (US); KMIECIK, Jacek, Chicago, IL 60606-2016 (US)
(74) Representative: Cabinet Plasseraud

(57) **Abstract**

Method, system, and computer program product for predicting fatigue of personnel relative to a schedule for the personnel. A fatigue profile can be predicted for various personnel and an operations schedule can be arranged for each of the personnel that does not exceed the respective fatigue profiles. Past instances of the various operations can be analyzed to determine parameters for operations variances. In the event an operations variance occurs during a current operation, a likelihood that the operations variance will propagate to future vehicle operations can be determined. In the event that a current operations variance will result in variances to future operations and such future variances can cause a vehicle operator to exceed a fatigue point in time in his fatigue profile, a warning can be output to a vehicle scheduler. A recommendation for a personnel change can also be output to the vehicle scheduler.

## Description

### BACKGROUND

The present aspects relate to personnel scheduling, and more specifically, to scheduling personnel to avoid disruptions to operations during periods of fatigue.

Computer models and simulations are available to predict when personnel may become fatigued. For example, the Boeing Alertness Model (BAM) can predict fatigue for a pilot based on a number of factors, such as the time zone of the pilot's home base, the pilot's rest cycle, etc.

### SUMMARY

According to one embodiment, a method for identifying a conflict between a predicted schedule for a vehicle operator and a projected vehicle operation capability for the operator can include receiving a fatigue profile for the vehicle operator, wherein the fatigue profile characterizes a vehicle operation capability of the vehicle operator based on time. The method can also include identifying a schedule of one or more vehicle operations that the vehicle operator is scheduled to perform. The method can also include analyzing past instances of the vehicle operation to identify one or more parameters for operating variances for the one or more vehicle operations. The method can also include projecting a vehicle operation capability value for the vehicle operator, based on the identified one or more parameters and the fatigue profile. The method can also include outputting the projected vehicle capability value.

According to one embodiment, a system can include a memory that stores a fatigue profile for a vehicle operator, wherein the fatigue profile characterizes a vehicle operation capability of the vehicle operator based on time. The memory can also store a schedule of one or more vehicle operations that the vehicle operator is scheduled to perform. The system can also include a processor configured to analyze past instances of vehicle operations to identify parameters for operating variances for the one or more vehicle operations. The processor can also be configured to project a vehicle operation capability value for the vehicle operator, based on the identified one or more parameters and the fatigue profile. The processor can also be configured to output the projected vehicle operation capability value.

According to one embodiment, a computer program product for identifying a conflict between a predicted schedule for a vehicle operator and a projected vehicle operation capability value for the operator can include a computer-readable storage medium having computer-readable program code embodied therewith. The computer-readable program code can be executable by one or more computer processors to receive a fatigue profile for the vehicle operator, wherein the fatigue profile characterizes a vehicle operation capability of the vehicle operator based on time. The computer-readable program code can also be executable by one or more computer processors to identify a schedule of one or more vehicle operations that the vehicle operator is scheduled to perform. The computer-readable program code can also be executable by one or more computer processors to analyze past instances of the vehicle operations to identify parameters for operating variances for each of the one or more vehicle operations. The computer-readable program code can also be executable by one or more computer processors to project a vehicle operation capability value for the vehicle operator, based on the identified parameters and the fatigue profile. The computer-readable program code can also be executable by one or more computer processors to output the projected vehicle operation capability value.

### BRIEF DESCRIPTION OF THE SEVERAL VIEWS OF THE DRAWINGS

Figure 1 is a graph that depicts a vehicle operator's alertness over several days and operations assigned to the vehicle operator during periods of high alertness;
Figure 2A is a block diagram that depicts a schedule of flights for a pilot on a particular day;
Figure 2B is a graph that depicts alertness of the pilot of Figure 2A and that depicts an exemplary scenario in which the scheduled flights occur within the pilot's high alertness period;
Figure 2C is a graph that depicts alertness of the pilot of Figure 2A and that depicts an exemplary scenario in which the scheduled flights extend past the pilot's high alertness period;
Figure 2D is a graph that depicts alertness of the pilots of Figure 2A and the depicts another exemplary scenario in which the scheduled flights extend past the pilot's high alertness period;
Figure 3 is a block diagram of a process that embodiments of the system may use to determine and output a likelihood that a schedule of vehicle operations will exceed a fatigue profile for a vehicle operator; and
Figure 4 is a block diagram of a system that can calculate and output a likelihood that a schedule of vehicle operations will exceed a fatigue profile for a vehicle operator.

### DETAILED DESCRIPTION

Fatigue models that predict when a person will become fatigued are used in some instances to schedule personnel for various job duties. For example, the Boeing Alertness Model ("BAM") can output a predicted fatigue profile for a pilot based on several factors, such as the time zone of the pilot's home base. These fatigue models can be useful for scheduling personnel to job duties because personnel can be assigned to be on duty when their alertness levels are high. However, such fatigue models do not account for operation variances that can delay or prolong the job duties.

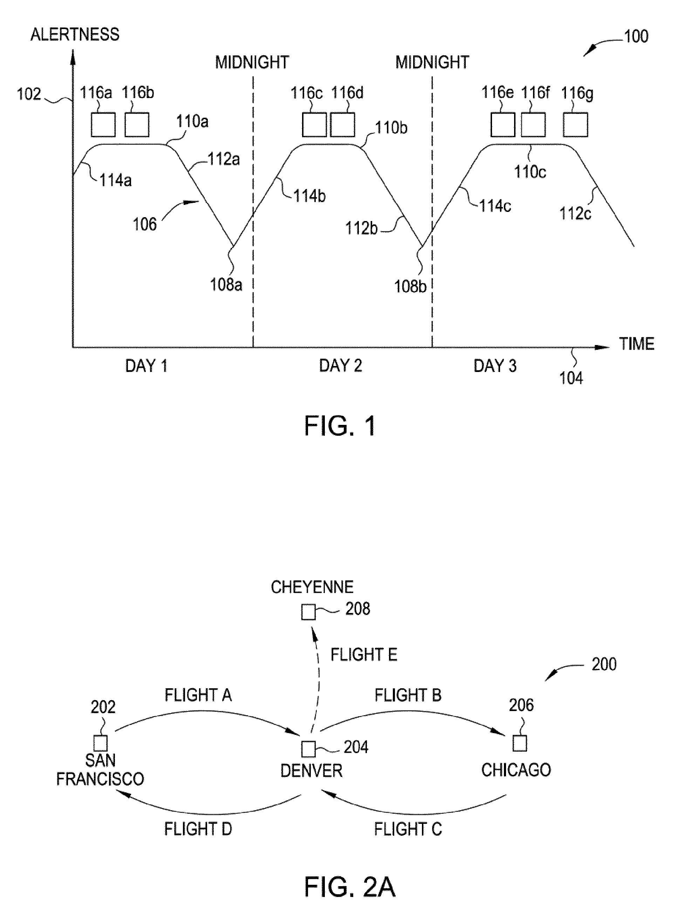

Figure 1 illustrates a chart 100 that shows an alertness level 102 for a vehicle operator over time 104. In particular, the chart 100 shows the alertness level of a vehicle operator over a period of three days. The chart 100 includes a fatigue profile 106 that indicates the alertness level for the particular vehicle operator. Generally, this particular vehicle operator has a high degree of alertness during the day, and his alertness level drops in the evening. Other vehicle operators may have different fatigue profiles. For example a vehicle operator who is acclimated to operating his vehicle overnight may have an alertness level that peaks in the middle of the night and is lowest in the middle of the day. For the exemplary vehicle operator in Figure 1, the vehicle operator's alertness level has low points 108a and 108b before midnight when the vehicle operator falls asleep. As the vehicle operator sleeps, his alertness level increases as indicated by increasing portions 114a, 114b, and 114c of the fatigue profile 106. During the day, while the vehicle operator is on duty, his alertness level is high and relatively constant as indicated by the relatively flat portions 110a, 110b, and 110c of the fatigue profile 106. Toward the end of the day, the vehicle operator's alertness level begins to drop (i.e., his fatigue level increases) as indicated by decreasing portions 112a, 112b, and 112c of the fatigue profile 106.

Ideally, the vehicle operator is assigned to a schedule of vehicle operations that fit within the periods 110a, 110b, and 110c during which his alertness level is high and relatively constant. At such time, the vehicle operator may be most capable of operating a vehicle. Thus, the alertness level of the vehicle operator can be correlated to a vehicle operation capability of the vehicle operator. For example, on day one of the chart 100, the vehicle operator is scheduled to perform a first vehicle operation 116a and a second vehicle operation 116b during the period of high alertness 110a when he may be most capable of operating a vehicle. Similarly, on the second day, the vehicle operator is scheduled to perform a first vehicle operation 116c and a second vehicle operation 116d during the period of high alertness 110b when he may be most capable of operating a vehicle. On the third day, however, the vehicle operator is scheduled to perform a first vehicle operation 116e, a second vehicle operation 116f, and a third vehicle operation 116g. As shown in the chart 100, the third vehicle operation 116g on the third day extends past a fatigue point for the vehicle operator, where his alertness level and vehicle operation capability starts to drop off. In such an instance as illustrated for day three, the vehicle operator's performance may be degraded for this third vehicle operation

In various instances, the vehicle operation capability of the vehicle operator can be quantified as a value. In various instances, the vehicle operation capability value may quantify the vehicle operation capability relative to a schedule of vehicle operations for the vehicle operator. For example, the vehicle operation capability value may be either "one" or "zero" in which a "zero" indicates that the vehicle operator is projected to become fatigued before he performs the scheduled one or more vehicle operations and a "one" indicates that the vehicle operator is projected to become fatigued after he performs the scheduled vehicle operations. As another example, the vehicle operation capability value may be a time quantity. For example, the vehicle operation capability value may be a positive quantity of minutes that denotes an amount of time that is projected to elapse after the vehicle operator performs the scheduled one or more vehicle operations before the vehicle operator becomes fatigued. On the other hand, if the vehicle operator is projected to become fatigued before he completes performance of the scheduled one or more vehicle operations, the vehicle operation capability value can be a negative number that is equal to the amount of time projected to elapse between the time when the vehicle operator becomes fatigued and the time when the last vehicle operation is predicted to be completed.

In various instances, the vehicle operation capability value can be compared to a threshold to decide whether to replace a crew member. In the example above in which the vehicle operation capability value is either "one" or "zero," the threshold may be set at "one" so that a vehicle operator is recommended to be removed from at least part of the schedule if he is projected to become fatigued before he completes performance of the scheduled vehicle operations. In the example above in which the vehicle operation capability value is a number of minutes, the threshold may be set to "zero" such that any negative number so that a vehicle operator is recommended to be removed from at least part of the schedule if he is projected to become fatigued before he completes performance of the scheduled vehicle operations. In various circumstances, the threshold may be set to a positive number to provide some extra margin. Likewise, the threshold may be set to a negative number to allow for some amount of fatigue before a vehicle operator is removed from a schedule of vehicle operations. For example, a threshold may be set for negative fifteen minutes to avoid disturbing a schedule if fatigue is only projected to start setting in during the last few minutes of a vehicle operation.

Referring specifically to an airline, when an airline produces a crew schedule, a pilot normally would not be assigned a flight such as 116g such that the pilot is flying when his alertness level (and vehicle operation capability) is dropping. However, flight operations are often subject to operations variances (e.g., delays) due to weather and/or operational considerations (e.g., air traffic control holds, maintenance, and the like). Such operations variances can affect not only the immediate flight but can also affect subsequent flights. As a result, a pilot's schedule, if unchanged, could put him in a position of operating a flight while fatigued. In various embodiments described herein, past instances of flight data can be used to determine the likelihood that operations variances will affect future flights. These likelihoods can be used to calculate a likelihood that a schedule for a pilot will extend past the pilots fatigue point.

Figure 2A depicts an exemplary schedule of flight operations for a pilot (or for a crew of pilots) for a particular day. In this exemplary schedule 200, the pilot has four flights: Flight A from San Francisco 202 to Denver 204, Flight B from Denver 204 to Chicago 206, Flight C from Chicago 206 to Denver 204, and Flight D from Denver 204 to San Francisco 202. In this exemplary scenario, the airline for which the pilot flies has a crew base in Chicago 206. Usually, at a crew base, reserve pilots are readily available, meaning they do not have to travel from other locations to perform a flight.

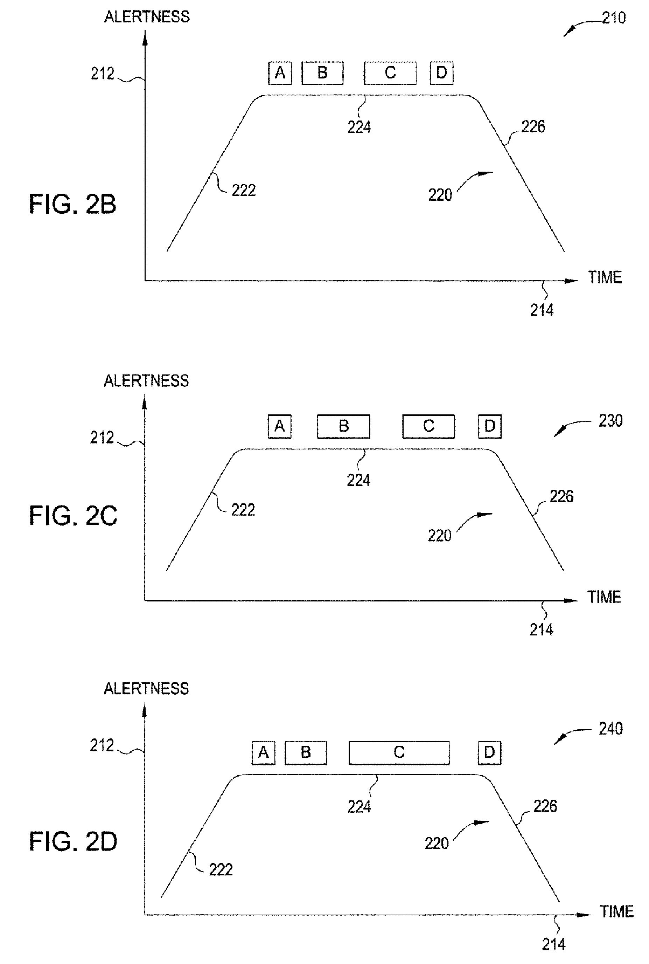

Figures 2B through 2D illustrate charts of the pilot's alertness level (indicated by fatigue profile 220) over time on the day of the exemplary schedule 200. In a first scenario 210 shown in Figure 2B, Flight a, Flight B, Flight C, and Flight D are all flown as scheduled such that the pilot departs from San Francisco 202 at a high alertness level 224 (after his alertness level has climbed 222) and returns to San Francisco 202 at a high alertness level 224 (before his alertness level begins to drop 226. Figures 2C and 2D illustrate scenarios 230 and 240, respectively, in which the flights of the exemplary schedule 200 are subject to delays (i.e., operations variances).

Figure 2C illustrates a scenario 230 in which Flight B takes longer than expected. For example, Flight B could have been delayed on the ground due to an air traffic control hold or weather. As another example, Flight B could have been delayed in the air due to air traffic control, weather, or the like. In this scenario 230, the pilot can still fly Flight C, but his alertness level would be dropping by the time he would finish operating Flight D. Thus, if the pilot flew Flight C to Denver 204, then a different pilot would have to fly Flight D from Denver 204 to San Francisco 202. In such an instance, the airline may have to fly a different crew to Denver to fly Flight D from Denver 204 to San Francisco 202. Flying a crew to an airport as described in this example can be relatively expensive (e.g., the relief crew takes up seats on an airplane that could otherwise be filled by paying passengers and Flight D may be severely delayed while waiting for the relief crew). As discussed above, in this example, Chicago 206 is a crew base. Thus, by monitoring the delay to Flight B from Denver 204 to Chicago 206 and the effect of the delay on the pilot's schedule relative to his alertness level, the airline has an opportunity to preemptively perform a crew swap in Chicago 206 where another pilot is readily available.

Figure 2D illustrates a scenario 240 in which Flight C takes longer than expected. For example Flight C could have been delayed due to weather, air traffic control, congestion, or the like. In this scenario, the pilot's alertness level would be dropping by the time he completed Flight D from Denver 204 to San Francisco 202. In contrast to the scenario 230 shown in Figure 2C, in this scenario 240, the delay to Flight C occurs after Flight C has left Chicago 206. As a result, the low-cost crew swap in Chicago is not an option. Thus, the pilot scheduled to fly Flight D will have to be replaced by a different pilot in Denver. As described above, a different pilot (or flight crew) could be flown to Denver 204 to fly Flight D from Denver 204 to San Francisco 202. Alternatively, the pilot of Flight C could be placed onto a shorter flight leaving Denver that will be completed before the pilot reaches his fatigue point. For example, Figure 2A shows a Flight E from Denver 204 to Cheyenne, Wyoming 208, which would be shorter than Flight D from Denver 204 to San Francisco 202. The pilot of Flight C, who will reach his fatigue point before Flight D arrives in San Francisco 202 in this scenario 240, could instead perform Flight E to Cheyenne 208 and the pilot who was scheduled to perform Flight E could perform Flight D (assuming this pilot will not reach his fatigue point while operating Flight D).

By monitoring the progress of flights in real-time or near-real-time, a crew scheduler can preemptively reassign pilots instead of waiting for the pilot to self-report as being fatigued.

As described above, embodiments described herein can analyze past instances of vehicle operations to determine the likelihood that a schedule for a vehicle operator could result in the operator operating the vehicle past his fatigue point. For example, the analysis of the past instances of data can result in a distribution of delays (e.g., statistical parameters such as a mean, median, and standard distribution). By way of illustration, a first flight may be late 85% of the time. However, the first flight is rarely late by more than five minutes. A second flight may only be late 10% of the time. However, the second flight may tend to be late by at least a half hour when it is delayed. The delays on the second flight may be more problematic for crew scheduling than the delays on the first flight. The analysis of data from past instances of flights may also reveal trends. For example, Flight C from Chicago 206 to Denver 204 may be scheduled to depart at 2:30 PM. The data may show that flights that depart from the gate at 2:30 PM generally take off on time and arrive in Denver on time. The data may also show that flights that depart from the gate no more than five minutes late (i.e., 2:35 PM) generally take off five minutes late and arrive in Denver five minutes late. However, the data may also show that if Flight C departs the gate more than fifteen minutes late (i.e., 2:45 PM), then the flight takes off at least a half hour late and arrives in Denver at least forty five minutes late due to a surge in flights departing Chicago that were otherwise avoided by leaving at 2:30 PM.

The data can include indications of past, present, and future external factors that can affect the parameters, such as weather, air traffic control, and airport capacity. For example, a certain flight may be delayed more when there are thunderstorms within fifty miles of the destination airport than when there are thunderstorms en route to the destination airport. Such different delays may result in different parameters that are dependent on the weather conditions. As another example, a flight may be delayed in instances when a particular air traffic control station is understaffed (e.g., a controller is sick or otherwise absent). Such a delay may result in different parameters that are dependent on staffing levels of air traffic control stations. As another example, airport capacity and/or capability may affect delays for aircraft. For example, if a particular airport electronic landing systems (e.g., Instrument Landing System) are not functioning (e.g., due to maintenance), then incoming flights may be delayed to account for increased separation between flights. Such a delay may result in different parameters that are dependent on the capabilities of the destination airport. Referring to the example above, an airport may operate at capacity during certain times of the day, meaning that aircraft are taking off and landing at or close to a maximum safe rate. During such times, aircraft may have to wait to take off or land, which can cause delays. An aircraft that is delayed on takeoff may experience an extra delay if the take off delay pushes the arrival time at the destination airport to a time when the destination airport is operating at capacity. The exemplary external factors discussed above and other such factors can provide indicators for use of different parameters. In various instances, such parameters may be additive. For example, on a particular day in which a flight is likely to encounter an en route thunderstorm, a predicted delay for the flight can be determined by adding a first parameter related to a delay for the en route thunderstorm and a second parameter related to destination airport capacity if the thunderstorm delay will push the arrival to a time when the destination airport is operating at capacity. In various other instances, a best fit set of parameter may be chosen based on external factors that are present or likely to be present. For example, on a particular day in which a flight is likely to encounter an en route thunderstorm, a predicted delay for the flight could be determined based on a first parameter related to a delay for the en route thunderstorm. Alternatively, the predicted delay for the flight could be determined based on a second parameter related to destination airport capacity if the thunderstorm delay will push the arrival to a time when the destination airport is operating at capacity. The set of parameters that provides the best fit may be the set of parameters that provides the worst case (i.e., most conservative) prediction for delay.

Referring again to the scenario 230 in Figure 2C, if Flight B is delayed, but the analysis of past instances of Flight B indicate that the delay is most often no more than five minutes, then the pilot may arrive in Chicago 206 with sufficient time for Flight C to depart the gate no more than five minutes late. In this exemplary scenario, a scheduler may choose to leave the pilot on Flights C and D. However, if the analysis of past instances of Flight B indicate that the delay is most often at least a half hour, then the pilot likely will not arrive in Chicago 206 with sufficient time for Flight C to depart before the surge in flights causes a large delay. As a result, the pilot may reach his fatigue point before Flight C reaches Denver 204 or before Flight D reaches San Francisco 202. In this exemplary scenario, a crew scheduler may choose to remove the pilot from Flights C and D to preemptively avoid a situation in which the pilot is too tired to fly Flight C or Flight D.

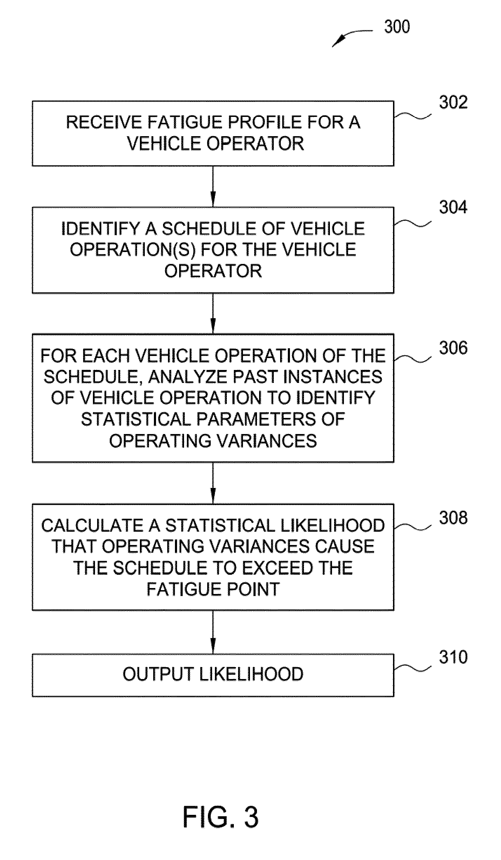

Figure 3 illustrates a process 300 to determine a likelihood that a schedule for a vehicle operator will result in the operator operating a vehicle past his fatigue point. In block 302, a fatigue profile for a vehicle operator can be received. As discussed above, software applications, such as the Boeing Alertness Model (BAM) can provide a predicted point in time at which a pilot's alertness level will drop. This point in time is the pilot's fatigue point. In block 304, a schedule of vehicle operations for the vehicle operator can be identified. For example, Figure 2 illustrates an exemplary schedule of vehicle operations for a pilot. Generally, a schedule for a vehicle operator in which all vehicle operations occur according to schedule should not extend past the operator's predicted fatigue point. In block 306, past instances of each of the vehicle operations in the operator's schedule can be analyzed to identify operating variances. As described above, in various instances, such parameters can include a mean operating delay, a standard deviation for an operating delay, and/or delays that worsen significantly due to a small change in a departure delay, for example. Also, as described above, the past instances of vehicle operation could also identify external factors that affect the parameters used to predict delays to a future flight. In block 308, the process 300 can include calculating or project a statistical likelihood that a vehicle operation capability value for the vehicle operator or an operating variance will cause the operator to exceed the fatigue point of his fatigue profile. As described above, the system can monitor the progress of the vehicle operations on the operator's schedule in real time or near real time to determine whether an operating variance is occurring. If an operating variance is occurring, then the variance can be compared to the parameters to calculate a likelihood that the variance will propagate through the remainder of the schedule of vehicle operations in a manner such that the operator will still be operating a vehicle when he reaches his fatigue point. As described above, a short delay in a first flight may result in a short delay in a second flight. However, a slightly longer delay in a first flight may result in a significantly longer delay in a second flight. In block 310, the process 300 can output the calculated or projected likelihood of the vehicle operator exceeding his fatigue point. As discussed above, the calculated likelihood can be output as a vehicle operation capability value. For example, the process 300 can output the calculated likelihood to a computer monitor of a crew scheduler. In various instances in which the calculated likelihood exceeds a threshold value (e.g., 10% likelihood, 25% likelihood, *etc.* or a time, such as 5 minutes, ten minutes, *etc*.), the process 300 may flag, highlight, *etc.* the calculated likelihood so that is it more visible to the crew scheduler. In various embodiments, the process may identify and recommend a remedy for the schedule that is likely to result in a vehicle operator exceeding his fatigue point. For example, the process 300 may recommend a crew swap at a low-swap-cost crew base. As another example, the process 300 may recommend switching crews on two different vehicle operations when the swap can result in both crews completing the vehicle operations before exceeding their fatigue points. The process 300 can provide a prompt for the crew scheduler to either accept or reject the recommended remedy.

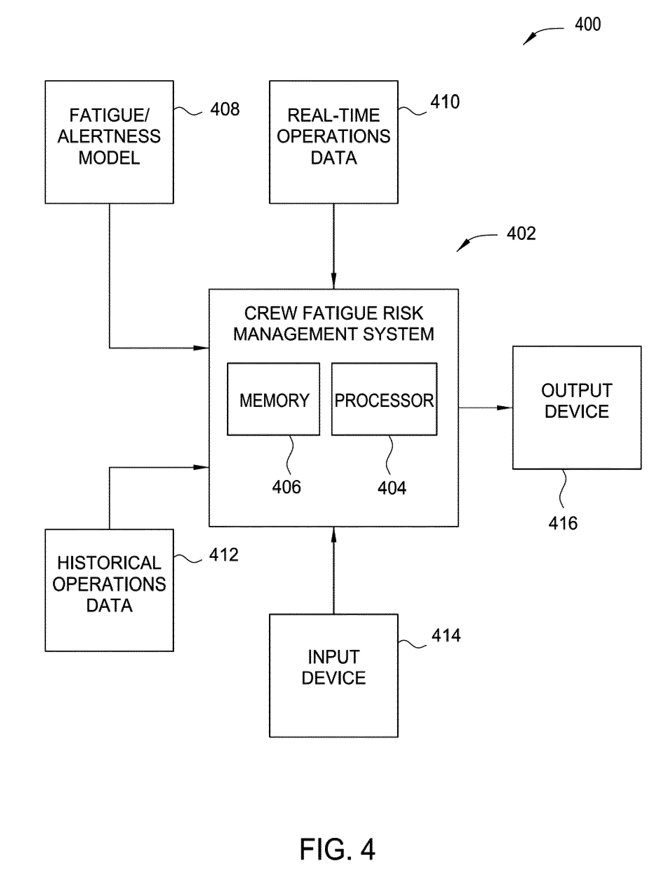

Figure 4 is a block diagram of a system 400 that can implement the processes described above. The system can include a crew fatigue risk management system 402 that can include computer memory 406 and a computer processor 404. The memory can store a computer program that executes on the processor 404 to perform the process 300 described with reference to Figure 3. The memory can also store schedules of vehicle operators. The crew fatigue risk management system 402 can receive as an input a fatigue and/or alertness model 408 that includes a fatigue point for an operator or operators. The fatigue and/or alertness model(s) 408 for operator(s) can be stored in memory 406. The crew fatigue risk management system 402 can also receive as an input data related to past instances of vehicle operation 412. The past instances of vehicle operation 412 can also be stored in memory 406. The crew fatigue risk management system 402 can also receive real-time or near-real-time operations data 410 that includes the current operating status of different vehicle operators. For example, the operations data 410 can include any current delays in vehicle operations. As described above, the processor 404 can analyze the operations data 410 and the past instances of vehicle operation 412 to calculate a likelihood that a vehicle operator will exceed his fatigue point. The processor 404 can output the calculated likelihood and, in some embodiments, a recommendation to an output device 416 (e.g., a computer display or a printed document). As discussed above, the calculated likelihood can be output as a vehicle operation capability value. The crew fatigue risk management system 402 can receive an indication from an input device 414 (e.g., a keyboard or a computer mouse) that a crew scheduler can use to acknowledge a calculated likelihood and to accept or reject a recommended action.

The embodiments described above have been discussed with reference to airline pilots. However, the embodiments could be used in other instances in which operators can become fatigued. For example, embodiments could be used to schedule bus drivers, truck drivers, train operators, air traffic controllers, surgeons, and crane operators.

The descriptions of the various aspects have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

In the preceding paragraphs, reference is made to aspects presented in this disclosure. However, the scope of the present disclosure is not limited to specific described aspects. Instead, any combination of the following features and elements, whether related to different aspects or not, is contemplated to implement and practice contemplated aspects. Furthermore, although aspects disclosed herein may achieve advantages over other possible solutions or over the prior art, whether or not a particular advantage is achieved by a given embodiment is not limiting of the scope of the present disclosure. Thus, the following aspects, features, and advantages are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

Aspects may take the form of an entirely hardware embodiment, an entirely software embodiment (including firmware, resident software, micro-code, etc.) or an embodiment combining software and hardware aspects that may all generally be referred to herein as a "circuit," "module" or "system."

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Embodiments of the invention may be provided to end users through a cloud computing infrastructure. Cloud computing generally refers to the provision of scalable computing resources as a service over a network. More formally, cloud computing may be defined as a computing capability that provides an abstraction between the computing resource and its underlying technical architecture (e.g., servers, storage, networks), enabling convenient, on-demand network access to a shared pool of configurable computing resources that can be rapidly provisioned and released with minimal management effort or service provider interaction. Thus, cloud computing allows a user to access virtual computing resources (e.g., storage, data, applications, and even complete virtualized computing systems) in "the cloud," without regard for the underlying physical systems (or locations of those systems) used to provide the computing resources.

Typically, cloud computing resources are provided to a user on a pay-per-use basis, where users are charged only for the computing resources actually used (e.g. an amount of storage space consumed by a user or a number of virtualized systems instantiated by the user). A user can access any of the resources that reside in the cloud at any time, and from anywhere across the Internet. In context of the present invention, a user may access applications (e.g., a crew scheduling application implementing the process 300 shown in Figure 3) or related data available in the cloud. For example, the crew scheduling application could execute on a computing system in the cloud and output a calculated likelihood that a vehicle operator will exceed his fatigue point. Doing so allows a user to access this information from any computing system attached to a network connected to the cloud (e.g., the Internet).

Further, the disclosure comprises embodiments according to the following clauses:
Clause 1. A method (300) for identifying a conflict between a predetermined schedule for a vehicle operator and a projected vehicle operation capability for the operator, the method comprising: receiving (302) a fatigue profile for the vehicle operator, wherein the fatigue profile characterizes a vehicle operation capability of the vehicle operator based on time; identifying (304) a schedule of one or more vehicle operations that the vehicle operator is scheduled to perform; for the one or more vehicle operations, analyzing (306) past instances of the vehicle operation to identify one or more parameters for operating variances; based on the identified one or more parameters and the fatigue profile, projecting (308) a vehicle operation capability value for the vehicle operator; and outputting (310) the projected vehicle capability value.
Clause 2. The method of clause 1, wherein each operating variance includes an added elapsed time to the scheduled vehicle operation, wherein the one or more parameters include a likelihood of an added elapsed time, wherein the projected vehicle capability value includes a predicted fatigue point in time when the vehicle operator is likely to become fatigued, and wherein the operating variances of the at least one vehicle operations cause the predetermined schedule to extend to a time that is past the fatigue point in time of the vehicle operator when the added elapsed times to the predetermined schedule of vehicle operations adds a total amount of time to the predetermined schedule that extends past the fatigue point in time of the vehicle operator.
Clause 3. The method of clause 1, wherein outputting the projected vehicle capability value comprises outputting a recommendation to remove the vehicle operator from at least a portion of the predetermined schedule when the projected vehicle capability value exceeds a threshold.
Clause 4. The method of clause 1, further comprising: in response to receiving a crew removal command, removing the operator from at least one of the one or more vehicle operations in the predetermined schedule of one or more vehicle operations.
Clause 5. The method of clause 4, further comprising assigning a second vehicle operator to the at least one of the vehicle operations in the predetermined schedule.
Clause 6. The method of clause 1, further comprising: identifying a least-cost point in the identified schedule to remove the vehicle operator from at least a portion of the schedule; outputting a recommendation to remove the vehicle operator from at least a portion of the identified schedule at the identified least-cost point when the projected vehicle capability value exceeds a threshold.
Clause 7. The method of clause 6, further comprising assigning a second vehicle operator to the at least one of the vehicle operations in the identified schedule.
Clause 8. A system, comprising: memory (406) storing: a fatigue profile for a vehicle operator (408), wherein the fatigue profile characterizes a vehicle operation capability of the vehicle operator based on time; and a schedule of one or more vehicle operations (410) that the vehicle operator is scheduled to perform; and a processor (404) configured to: for the one or more vehicle operations, analyze (306) past instances of the vehicle operation to identify one or more parameters for operating variances; based on the identified one or more parameters and the fatigue profile, projecting (308) a vehicle operation capability value for the vehicle operator; and output (310) the projected vehicle capability value.
Clause 9. The system of clause 8, wherein each operating variance includes an added elapsed time to the scheduled vehicle operation, wherein the one or more parameters include a likelihood of an added elapsed time, wherein the projected vehicle capability value includes a predicted fatigue point in time when the vehicle operator is likely to become fatigued, and wherein the operating variances of the at least one vehicle operations cause the schedule to extend to a time that is past the fatigue point in time of the vehicle operator when the added elapsed times to the schedule of vehicle operations adds a total amount of time to the identified schedule that extends past the fatigue point in time of the vehicle operator.
Clause 10. The system of clause 8, wherein the operating variances include at least one of an operating variance due to weather and an operating variance operational considerations, wherein the output of the projected vehicle capability value includes a recommendation to remove the vehicle operator from at least a portion of the schedule when the projected vehicle capability value exceeds a threshold.
Clause 11. The system of clause 8, wherein the processor is further configured to: in response to receiving a crew removal command, remove the operator from at least one of the one or more vehicle operations in the schedule of one or more vehicle operations.
Clause 12. The system of clause 11, wherein the process is further configured to assign a second vehicle operator to the at least one of the vehicle operations in the schedule.
Clause 13. The system of clause 8, wherein the processor is further configured to: identify a least-cost point in the schedule to remove the vehicle operator from at least a portion of the schedule; output a recommendation to remove the vehicle operator from at least a portion of the schedule at the identified least-cost point when the projected vehicle capability value exceeds a threshold.
Clause 14. The system of clause 13, wherein the processor is further configured to assign a second vehicle operator to the at least one of the vehicle operations in the schedule.
Clause 15. A computer program product for identifying a conflict between a predetermined schedule for a vehicle operator and a projected vehicle operation capability for the operator, the computer program product comprising: a computer-readable storage medium (406) having computer-readable program code embodied therewith, the computer-readable program code executable by one or more computer processors to: receive (302) a fatigue profile for the vehicle operator, wherein the fatigue profile characterizes a vehicle operation capability value of the vehicle operator; identify (304) a schedule of one or more vehicle operations that the vehicle operator is scheduled to perform; for the one or more vehicle operations, analyze (306) past instances of the vehicle operation to identify one or more parameters for operating variances; based on the identified one or more parameters and the fatigue profile, projecting (308) a vehicle operation capability value for the vehicle operator; and output (310) the projected vehicle operation capability value.
Clause 16. The computer program product of clause 15, wherein each operating variance includes an added elapsed time to the scheduled vehicle operation, wherein the parameters include a likelihood of an added elapsed time, wherein the projected vehicle capability value includes a predicted fatigue point in time when the vehicle operator is likely to become fatigued, and wherein the operating variances of the at least one vehicle operations cause the identified schedule to extend to a time that is past the fatigue point in time of the vehicle operator when the added elapsed times to the schedule of vehicle operations adds a total amount of time to the identified schedule that extends past the fatigue point of the vehicle operator.
Clause 17. The computer program product of clause 15, wherein the output of the projected vehicle capability value includes a recommendation to remove the vehicle operator from at least a portion of the identified schedule when the projected vehicle capability value exceeds a threshold.
Clause 18. The computer program product of clause 17, wherein the computer-readable program code is further executable by one or more computer processors to: in response to receiving a crew removal command, remove the operator from at least one of the one or more vehicle operations in the identified schedule of one or more vehicle operations.
Clause 19. The computer program product of clause 15, wherein the computer-readable program code is further executable by one or more computer processors to assign a second vehicle operator to the at least one of the vehicle operations in the identified schedule.
Clause 20. The computer program product of clause 15, wherein the processor is further configured to: identify a least-cost point in the identified schedule to remove the vehicle operator from at least a portion of the schedule; output a recommendation to remove the vehicle operator from at least a portion of the identified schedule at the identified least-cost point when the projected vehicle capability value exceeds a threshold.
Clause 21. The computer program product of clause 20, wherein the processor is further configured to assign a second vehicle operator to the at least one of the vehicle operations in the identified schedule.

While the foregoing is directed to embodiments of the present invention, other and further embodiments of the invention may be devised without departing from the basic scope thereof, and the scope thereof is determined by the claims that follow.

## Claims

1. A method (300) for identifying a conflict between a predetermined schedule for a vehicle operator and a projected vehicle operation capability for the operator, the method comprising:
receiving (302) a fatigue profile for the vehicle operator, wherein the fatigue profile characterizes a vehicle operation capability of the vehicle operator based on time;
identifying (304) a schedule of one or more vehicle operations that the vehicle operator is scheduled to perform;
for the one or more vehicle operations, analyzing (306) past instances of the vehicle operation to identify one or more parameters for operating variances;
based on the identified one or more parameters and the fatigue profile, projecting (308) a vehicle operation capability value for the vehicle operator; and
outputting (310) the projected vehicle capability value.

2. The method of claim 1, wherein each operating variance includes an added elapsed time to the scheduled vehicle operation, wherein the one or more parameters include a likelihood of an added elapsed time, wherein the projected vehicle capability value includes a predicted fatigue point in time when the vehicle operator is likely to become fatigued, and wherein the operating variances of the at least one vehicle operations cause the predetermined schedule to extend to a time that is past the fatigue point in time of the vehicle operator when the added elapsed times to the predetermined schedule of vehicle operations adds a total amount of time to the predetermined schedule that extends past the fatigue point in time of the vehicle operator.

3. The method of claim 1, wherein outputting the projected vehicle capability value comprises outputting a recommendation to remove the vehicle operator from at least a portion of the predetermined schedule when the projected vehicle capability value exceeds a threshold.

4. The method of claim 1, further comprising:
in response to receiving a crew removal command, removing the operator from at least one of the one or more vehicle operations in the predetermined schedule of one or more vehicle operations.

5. The method of claim 4, further comprising assigning a second vehicle operator to the at least one of the vehicle operations in the predetermined schedule.

6. The method of claim 1, further comprising:
identifying a least-cost point in the identified schedule to remove the vehicle operator from at least a portion of the schedule;
outputting a recommendation to remove the vehicle operator from at least a portion of the identified schedule at the identified least-cost point when the projected vehicle capability value exceeds a threshold.

7. The method of claim 6, further comprising assigning a second vehicle operator to the at least one of the vehicle operations in the identified schedule.

8. A system, comprising:
memory (406) storing:
a fatigue profile for a vehicle operator (408), wherein the fatigue profile characterizes a vehicle operation capability of the vehicle operator based on time; and
a schedule of one or more vehicle operations (410) that the vehicle operator is scheduled to perform; and
a processor (404) configured to:
for the one or more vehicle operations, analyze (306) past instances of the vehicle operation to identify one or more parameters for operating variances;
based on the identified one or more parameters and the fatigue profile, projecting (308) a vehicle operation capability value for the vehicle operator; and
output (310) the projected vehicle capability value.

9. The system of claim 8, wherein each operating variance includes an added elapsed time to the scheduled vehicle operation, wherein the one or more parameters include a likelihood of an added elapsed time, wherein the projected vehicle capability value includes a predicted fatigue point in time when the vehicle operator is likely to become fatigued, and wherein the operating variances of the at least one vehicle operations cause the schedule to extend to a time that is past the fatigue point in time of the vehicle operator when the added elapsed times to the schedule of vehicle operations adds a total amount of time to the identified schedule that extends past the fatigue point in time of the vehicle operator.

10. The system of claim 8, wherein the operating variances include at least one of an operating variance due to weather and an operating variance operational considerations, wherein the output of the projected vehicle capability value includes a recommendation to remove the vehicle operator from at least a portion of the schedule when the projected vehicle capability value exceeds a threshold.

11. The system of claim 8, wherein the processor is further configured to:
in response to receiving a crew removal command, remove the operator from at least one of the one or more vehicle operations in the schedule of one or more vehicle operations.

12. The system of claim 11, wherein the process is further configured to assign a second vehicle operator to the at least one of the vehicle operations in the schedule.

13. The system of claim 8, wherein the processor is further configured to:
identify a least-cost point in the schedule to remove the vehicle operator from at least a portion of the schedule;
output a recommendation to remove the vehicle operator from at least a portion of the schedule at the identified least-cost point when the projected vehicle capability value exceeds a threshold.

14. The system of claim 13, wherein the processor is further configured to assign a second vehicle operator to the at least one of the vehicle operations in the schedule.
